# EUROPEAN PATENT APPLICATION

(11) **EP 1 175 106 A2**
(43) Date of publication of application: **23.01.2002**
(21) Application number: 01117112.1
(22) Date of filing: 13.07.2001
(51) Int. Cl.: H04N 13/02

(54) **Stereoscopic image pickup apparatus and method**

(30) Priority: 18.07.2000 JP 2000218011
(71) Applicant: SCALAR CORPORATION, Tokyo 151-0053 (JP)
(72) Inventor: Yamamoto, Masao, Shibuya-ku, Tokyo 151-0053 (JP)
(74) Representative: Manitz, Finsterwald & Partner GbR

(57) **Abstract**

In a stereoscopic image pickup device, an image pickup device A accommodates one image pickup element 110 to which an image light for a left eye and an image light for a right eye for picking up a left-eye image and a right-eye image are guided, and one objective lens in a case. A light shield plate 220 having two openings defined is disposed between the image pickup element 110 and the objective lens 210. Polarizers that polarize lights which have passed therethrough into linear polarized lights whose vibration planes are orthogonal to each other are fitted into' those two openings. A liquid crystal plate 120 and a selection polarizing plate 125 are disposed between the objective lens and the image pickup element 110. The selection polarizing plate 125 polarizes a light that has passed therethrough into a linear polarized light whose vibration plane has the same orientation as that of the light that has passed through any one of the above-mentioned polarizers. The liquid crystal plate 120 alternately takes a state where the polarized light is allowed to pass through the liquid crystal plate 120 after rotating the vibration plane of the polarized light that has passed through the above-mentioned opening by 90° and a state the polarized light is allowed to pass through the liquid crystal plate 120 as it is. As a result, the image lights that have passed those two openings are alternately picked up by the one image pickup element 110.

## Description

### BACKGROUND OF THE INVENTION

### 1. Field of the Invention

The present invention relates to an image pickup technique for picking up a stereoscopic image used for conducting a stereoscopic vision.

### 2. Description of the Related Art

The stereoscopic vision is obtained by the celebration of brains using such a phenomenon that a parallax occurs in images picked up by the respective right and left eyes, and there have been known various techniques in which an image displayed on a display device can be stereoscopically viewed by using the parallax.

In order to conduct the stereoscopic vision, it is necessary to supply image lights from images for the respective right and left with a constant parallax. In order to realize the supply of the image lights, the following two kinds of techniques have been mainly employed. That is, there are one technique in which the images for the respective right and left eyes are projected on two display screens, respectively, and the images for the respective right and left eyes are viewed by the respective right and left eyes, separately, and another technique in which images for the respective right and left eyes are superimposed and displayed on one display screen, and the image lights from those images are separated from each other due to some means and then given to the respective right and left eyes.

Both of those techniques have good and bad points, respectively. However, even if any technique is applied, the image for the left eye and the image for the right eye which are supplied to the respective eyes of a viewer are required. Appropriate visual angles are given to both of those images, to thereby make a person who views a reproduced image conduct the stereoscopic vision.

In other words, in the case of conducting the stereoscopic vision, even if any technique is employed, it is necessary to produce the image for the left eye and the image for the right eye with an appropriate visual angle, and to supply the image lights from those images to the respective right and left eyes of the viewer.

Up to now, the production of the image for the left eye and the image for the right eye as described above has been made by picking up the mage with the use of two video cameras to which an appropriate visual angle is given. Then, one of the images picked up by the respective video cameras is used as the image for the left eye and the other image is used as the image for the right eye. The image for the left eye and the image for the right eye are reproduced by a predetermined display device, to thereby supply the image for the left eye and the image for the right eye to the respective eyes.

In fact, it is possible to make the viewer conduct the stereoscopic vision by using the stereoscopic image produced in the above method.

However, in the method using two video cameras, a variation in an image quality such as brightness or hue is liable to occur between the images picked up by both of those video cameras. If the variation occurs between the image for the right eye and the image for the left eye, a fatigue occurring while the stereoscopic. vision is conducted becomes large, or the stereoscopic vision cannot be conducted as occasion demands. Therefore, in the conventional method, there is required that an image quality is so adjusted as to eliminate the above-mentioned variation.

For example, a process for adjusting the image quality with respect to image data is conducted in advance, or some mechanism for adjusting the image is disposed on a display that displays the image data. However, the above means does not result in a proper countermeasure because the means is liable to cause vexatious complication of processing or high costs.

### SUMMARY OF THE INVENTION

The present invention has been made to solve the above problems with the conventional technique, and therefore an object of the present invention is to provide a technique of picking up a stereoscopic image which produces an image for a left eye and an image for a right eye without adjusting an image quality, to which an appropriate visual angle is given and which are used as a stereoscopic image.

In order to achieve the above object, the present invention provides a device for picking up a stereoscopic image structured as follows:

That is, according to the present invention, there is provided a device for picking up a stereoscopic image, comprising: one image pickup element to which an image light for a left eye, and an image light for a right eye are guided for picking up an image for the left eye and an image for the right eye which are used as a stereoscopic image and given an appropriate visual angle: a left-eye shutter means disposed in an optical path of the image light for the left eye for taking any one of a shield state where the image light for the left eye is shielded and a pass state where the image light for the left eye is allowed to pass; and a right-eye shutter means for taking any one of a shield state where the image light for the right eye is shielded and a pass state where the image light for the left eye is allowed to pass; wherein said left-eye shutter means and said right-eye shutter means are alternately put into the pass state to make said image pickup element alternately pick up the image light for the right eye and the image light for the left eye.

The above image pickup device is designed in such a manner that the image light for the right eye and the image light for the left eye are alternately picked up by one image pickup element. Therefore, because the image data representative of the image for the left eye and the image for the right eye obtained in the image pickup device is picked up by the common image pickup element, a variation in the image quality is suppressed.

The image pickup device according to the present invention may include one objective lens system that allows the image light for the left eye and the image light for the right eye to pass. That is, not only the image pickup element but also the objective lens system is commonly used for both of the image light for the left eye and the image light for the right eye. If the objective lens system is also commonly used, an optical path through which the image light for the left eye and the image light for the right eye reach the image pickup element is made common to both of the image lights. As a result, the image data representative of the image for the left eye and the image for the right eye which are obtained by the image pickup further reduces the variation in the image quality.

The image pickup device according to the present invention includes one light shield plate with two openings so that one light that has passed through one of those two openings in said light shield plate becomes the image light for the left eye, and the other light that has passed through the other opening in said shield plate becomes the image light for the right eye. With this structure, one part of the light that has reached the light shield plate can be used as the image light for the left eye, and the other part of the light can be used as the image light for the right eye. Therefore, the image data representative of the image for the left eye and the image for the right eye which is obtained by the image pickup device reduces the variation in the image quality. In particular, in the case where the objective lens system is also commonly used for both of those image lights, because an optical path of the image light for the left eye and an optical path of the image light for the right eye through which those image lights are received by the objective lens and thereafter reach the image pickup element are made substantially common, the variation in the image quality hardly occurs.

The light shield plate may be disposed anywhere in the image pickup device if the light shield plate is designed such that one light that has passed through one of the openings becomes the image light for the left eye and another light that has passed through the other opening becomes the image light for the right eye. For example, the light shield plate may be disposed in an optical path between the objective lens and the image pickup element.

The light shield plate may be disposed in proximity to an image side principle point of the objective lens system. If the light shield plate is disposed in proximity to the image side principle point, the light shield plate (two openings disposed in the light shield plates with accuracy) functions as an aperture stop. That is, this case makes it hard to escape the image light. On the other hand, if the light shield plate is disposed apart from the image side principle point, the image light escaped from the light shield plate increases with the result that the light shield plate functions as a field stop. Under the above circumstances, the light shield plate is disposed in proximity to the image side principle point of the objective lens, thereby being capable of making it difficult to escape the image light from the light shield plate.

In the case where the objective lens system is formed of one objective lens, the light shield plate can be disposed close to any surface of the objective lens. In the case where the objective lens is formed of a single lens, the image side principle point is positioned within the lens. Therefore, in the case where the objective lens is formed of a single lens, the light shield plate is made close to the objective lens so that the light shield plate becomes closest to the image side principle point, as a result of which the light shield plate preferably functions as an aperture stop.

The above-mentioned two openings may be defined anywhere in the light shield plate. For example, those openings may be defined eccentrically from the optical axis of the objective lens system by regular distances, respectively. With this structure, the properties of the lights that pass through those two openings can be equalized without depending on the aberration of the respective lenses that constitute the objective lens diameter. Therefore, the properties of the image light for the left eye and the image light for the right eye are equalized, thereby being capable of further reducing a variation in the image quality.

The above-mentioned shutter means can be structured without any limits if the shutter means can selectively take any one of the shield state where the image light is shielded and the pass state where the image light is allowed to pass.

For example, the shutter means may be structured as follows:

Each of the left-eye shutter means and the right-eye shutter means may include a shutter plate that is so disposed as to be movable forward and backward in an optical path of the image light for the left eye or the image light for the right eye, and the light does not pass through the shutter plate. Also, the shutter plate may be disposed in each of the openings of the above-mentioned light shield plate. The structure of the shutter plate may be realized by the provision of a shutter used for a normal camera in each of the openings of the light shield plate.

The image pickup device having the above shutter means can be simply realized by using the following part.

That is, there is provided a part which is fitted in an optical path of the image light of a video camera having one image pickup element and guides the image light for the left eye and the image light for the right eye to which an appropriate visual angle is given to said image pickup element, to thereby pick up a stereoscopic image by said video camera, wherein said part has two openings, one light that has passed through one of the openings in said light shield plate becomes the image light for the left eye, and another light that has passed through the other opening in said light shield plate becomes the image light for the right eye, and wherein a shutter plate through which a light does not pass and which is so disposed as to be movable forward and backward in an optical path of the image light for the left eye or the image light for the right eye is disposed in each of the openings. The use of the above part makes it possible to realize the image pickup device of the present invention by using an existing video camera.

The left-eye shutter means and the right-eye shutter means can be realized by a mechanism using a polarizing plate, a liquid crystal plate and a selection polarizing plate as stated below.

That is, the left-eye shutter means and the right-eye shutter means are formed of a polarizing plate comprising two polarizing plates that polarizes the image light that has passed through one polarizing plate into a polarized light different in an orientation of a vibrating plane from the image light that has passed through another polarizing plate; and a passing light selecting means for alternately taking a first state in which one image light which has been polarized into the polarized light is shielded and the other image light is allowed to pass, and a second state in which the other image light which has been polarized into the polarized light is shielded, and said one image light is allowed to pass. With this structure, for example, only a light shield plate having a polarizing plate may be disposed in the vicinity of the lens system where it is difficult to conduct fine machining or to provide a motor for driving, and the liquid crystal plate requiring an electric wiring can be disposed in the vicinity of the image pickup element having a sufficient space. Therefore, according to the above structure, the difficulty is reduced in manufacturing the stereoscopic image pickup device according to the present invention.

In this case, it is possible that the objective lens and' the light shield plate are integrated with each other, the image pickup element, the liquid crystal plate and the selection polarizing plate are integrated together, and the image pickup element and the liquid crystal plate are separatable from the objective lens and the light shield plate. With the above structure, the light shield plate is exchangeable with the replacement of the objective lens. Because the openings defined in the light shield plate function as apertures as described above, there is a case in which the openings are preferably changed in accordance with the properties of the objective lens such as a magnification. In this example, if the objective lens and the light shield plate are integrated with each other, the image pickup element, the liquid crystal plate and the selection polarizing plate are integrated together, and the image pickup element and the liquid crystal plate are separatable from the objective lens and the light shield plate, a plurality of the objective lenses each being integrated with the light shield plate in combination may be then prepared. As a result, a preferred objective lens can be automatically exchanged in relation with the objective lens by only exchanging the objective lens with convenience.

Which of the objective lens, the light shield plate, the image pickup element, the liquid crystal plate and the selection polarizing plate are integrated together can be appropriately selected in accordance with the a purpose of using the image pickup ' device, whether the image pickup device picks up only the stereoscopic image, or not, or whether the image pickup device is structured by using a general video camera, or not. For example, it is possible that the objective lens, the light shield plate, the image pickup element, the liquid crystal plate and the selection polarizing plate are integrated together, and those integrated members are separatable from the image pickup element.

The above-mentioned passing light selecting means may be structured by using one liquid crystal plate and one selection polarizing plate as follows.

That is, the passing light selecting means includes one liquid crystal plate and one selection polarizing plate. The liquid crystal plate takes a non-rotation state in which the image light which has been polarized into the polarized light by the polarizing plate is allowed to pass without changing the orientation of its vibration plane, and a rotation state in which the image light which has been polarized into the polarized light by the polarizing plate is allowed to pass after its vibration plane has been rotated. The selection polarizing plate may allow one of the image lights that have passed through said polarizing plate to pass and the other image light to be shielded in one state of said non-rotation state and said rotation state, and allow the one of the image lights that have passed through said liquid crystal plate to be shielded and the other image light to be pass in the other state of said non-rotation state and said rotation state.

For example, the polarizing plates disposed on the openings of the light shield plate are arranged in such a manner that the vibration planes of the lights that have passed through the polarizing plates are orthogonal to each other, and the orientation of the selection polarizing plate is arranged in such a manner that the vibration plane of the light that has passed through the selection polarizing plate coincides with any one of the vibration planes of the lights that have passed through said polarizing plates. The polarizing plate alternately takes a state in which the vibration plane of the polarized light is allowed to pass as it is without rotating and a state in which the vibration plane of the polarized light is rotated by 90°. With the above structure, the above-mentioned passing light selecting means can be realized.

The shutter means can be structured as follows:

Each of the left-eye shutter means and the right-eye shutter means can be structured as follows: That is, each of the left-eye shutter means and the right-eye shutter means comprises: a polarizing plate that is disposed on each of the openings formed in the light shield plate and polarizes the light that has passed through the light shield plate into a polarized light; a liquid crystal plate that takes a non-rotation state in which the image light that has been polarized into a polarized light by said polarizing plate is allowed to pass without changing the orientation of its vibration plane and a rotation state in which the image light that has been polarized into a polarized light by said polarizing plate is allowed to pass after its vibration plane has been rotated; and a selection polarizing plate that allows the image light that has passed through said liquid crystal plate to pass in one of said non-rotation state and said rotation state, and shields the image light that has passed through said liquid crystal plate in the other of said non-rotation state and said rotation state.

With the above structure, because an area of the liquid crystal plate can be reduced to the degree of the areas of both the openings, the costs can be lessened.

In this structure, since each of the left-eye image light and the right-eye image light is allowed to pass or be shielded by the individual shutter means made up of the polarizer, the liquid crystal plate and the selection polarizing plate, the shutter means are independent from each other. That is, both of the polarizers may be designed such that the polarization planes of the lights that have passed through those polarizers are different from each other or made common to each other.

Similarly, in this case, some member of the objective lens, the light shield plate, the image pickup element, the liquid crystal plate and the selection polarizing plate are integrated together so as to be separatable from other members. Which members are integrated together can be appropriately selected as in the above-mentioned case. For example, the objective lens, the light shield plate (polarizer), the image pickup element, the liquid crystal plate and the selection polarizing plate are integrated together, and those integrated members can be separated from the image pickup element.

The change-over between the shield state and the passing state of the above-mentioned left-eye shutter means and right-eye shutter means may be conducted at any timing.

In the case where an intention is made that the viewer is made to view the stereoscopic image of a moving picture with the left-eye image and the right-eye image as the moving pictures, the above change-over needs to be conducted at a speed of the degree that the viewer who views the continuous left-eye image and the continuous right-eye image can recognize those images as a smooth moving picture.

Taking the above into consideration, both of the left-eye shutter means and the right-eye shutter means may change over the shield state and the passing state at time intervals shorter than, for example, 1/40 seconds.

The change-over between the shield state and the passing state in the left-eye shutter means and the right-eye shutter means does not always need to be conducted at the regular time intervals. In making the viewer conduct the stereoscopic vision, since the balance of the left-eye image and the right-eye image is important, it is preferable that image pickup is also conducted at regular intervals for both of the right and left eyes.

Also, the change-over between the shield state and the passing state in the left-eye shutter means and the right-eye shutter means can be determined taking a period of time during which one frame is displayed on a predetermined display device on which the stereoscopic image is displayed into consideration. That is, the left-eye shutter means and the right-eye shutter means can change over the shield state and the passing state at a time interval which is the half of the period of time during which one frame is displayed on the predetermined display device on which the stereoscopic image is displayed.

The above structure is advantageous in the application of the interlaced system to the display device. That is, in the case where the even lines and the odd lines of scanning lines are divided as an even field and an odd field, respectively, for management, an image for one frame is drawn in such a manner that after one field is subjected to drawing, another field is subjected to drawing. In this example, the image data obtained by conducing the change-over between the shield state and the passing state in the left-eye shutter means and the right-eye shutter means at a time interval which is the half of a period of time during which one frame is displayed on the display device on which the stereoscopic image is displayed takes appropriate synchronization, thereby being capable of displaying the right-eye image in one field of the even field and the odd field and displaying a left-eye image in the other field. With this structure, an existing display device is readily used for displaying the stereoscopic image.

In the general display device, there are many cases in which one frame is set to 1/30 seconds. In this case, both of the left-eye shutter means and the right-eye shutter means may change over the shield state and the passing state at a time interval of 1/60 seconds.

The present invention can be grasped as the following method which is executed by a video camera.

That is, there is provided a method of producing stereoscopic mage data that guides an image light for a left-eye image and an image light for a right-eye image to be used as a stereoscopic image to which an appropriate visual angle is given to an image pickup element of a video camera having said image pickup element to pick up the stereoscopic image and to produce the stereoscopic image data representative of the stereoscopic image which is a moving picture, including the left-eye image data representative of the left-eye image and the right-eye image data representative of the right-eye image, said method comprising the step of: alternately guiding the image light for the left eye and the image light for the right eye to said image pickup element to produce the stereoscopic image data in which the left-eye image data and the right-eye image data are alternately arranged.

In this case, the image light for the left eye and the image ' light for the right eye may be guided to the image pickup element at any timing, and the image light for the left eye and the image light for the right eye can be alternately guided to the image pickup element at regular time intervals shorter than 1/40 seconds to pick up the image.

Also, at how timing the image light for the left eye and the image light for the right eye are guided to the image pickup element may be determined taking the specification of the display device into consideration. For example, the image light for the left eye and the image light for the right eye can be alternately guided to the image pickup element at a time interval which is the half of a period of time during which one frame is displayed on a predetermined display device on which the stereoscopic image is displayed to pick up the image.

For example, the image light for the left eye and the image light for the right eye can be alternately guided to the image pickup element at a time interval of 1/60 seconds.

The image data representative of the stereoscopic image obtained by the above-mentioned image pickup device and the image data obtained by the above-mentioned stereoscopic image data producing method may be used for displaying the stereoscopic image on the predetermined display device.

For example, the left-eye image for one frame is displayed on the basis of the left-eye image data, the right-eye image for one frame is displayed on the basis of the right-eye image data, ' and those displays are alternately repeated, thereby being capable of displaying the stereoscopic image in which the left-eye image and the right-eye image are alternately continuous to each other on the display device.

Also, the above-described image data can be used as follows:

For example, there is provided an image display method which is executed by a display device comprising: a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; and a control means that receives data representative of the moving image to be displayed on said display screen, records the data in said frame memory, and displays the data on said display screen at a given timing to control an image displayed on said display screen, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed; wherein stereoscopic image data obtained by picking up the images while alternately guiding ' the image light for the left eye and the image light for the right eye to said image pickup element at a time interval which is the half of a period of time during which one frame is displayed on a predetermined display device on which the stereoscopic image is displayed is available.

That is, in the image display method in which the control means executes a step of receiving the stereoscopic image data produced in the stereoscopic image data producing method; a step of recording data representative of the stereoscopic image corresponding to one frame in said frame memory in an interlaced manner on the basis of a pair of the continuous left-eye image data and right-eye image data out of the received stereoscopic image data while the left-eye image is displayed in said first region and the right-eye image is displayed in said second region; and a step of displaying the stereoscopic image including the left-eye image and the right-eye image in one frame on said display screen on the basis of data representative of the stereoscopic image recorded in said frame memory, the stereoscopic image data is available.

In the above image display method, the stereoscopic image displayed on the display device includes the left-eye image and the right-eye image in each of the frames.

Also, there is provided an image display method which is executed by a display device comprising: a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; and a control means that receives data representative of the moving image to be displayed on said display screen, records the data in said frame memory, and displays the data on said display screen at a given timing to control an image displayed on said display screen, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed: wherein stereoscopic image data obtained by picking up the images while alternately guiding the image light for the left eye and the image light for the right eye to said image pickup element at a time interval of 1/60 seconds is available.

That is, in the image display method in which the control means executes a step of receiving the stereoscopic image data produced in the stereoscopic image data producing method; a step of recording data representative of the stereoscopic image corresponding to one frame in said frame memory in an interlaced manner on the basis of a pair of the continuous left-eye image data and right-eye image data out of the received stereoscopic image data while the left-eye image is displayed in said first region and the right-eye image is displayed in said second region; and a step of displaying the stereoscopic image including the left-eye image and the right-eye image in one frame on said display screen on the basis of data representative of the stereoscopic image recorded in said frame memory, the stereoscopic image data is available.

Likewise, in the above-mentioned image display method, the stereoscopic image displayed on the display device includes the left-eye image and the right-eye image in each of the frames.

In both of the above-described image display methods, the control means may record the data representative of the stereoscopic image corresponding to one frame in the frame memory in such a manner that each of said first region and said second region corresponds to one scanning line that constitutes the display screen.

As described above, the stereoscopic image data obtained according to the present invention can be employed by a predetermined display device, and with this employment, the stereoscopic image can be displayed on the display device. The stereoscopic image data can be used for reproduction in the display device directly from the image pickup device or after the stereoscopic image data has been recorded in a predetermined recording medium once.

In the case of transmitting the stereoscopic image data directly to the display device from the image pickup device, the image pickup device and the display device are integrated with each other, thereby being capable of providing a display integrated image pickup device.

For example, the combination of the image pickup device that picks up the images while changing over the shield state and the passing state in the left-eye shutter means and the right-eye shutter means at a time interval which is the half of a period of time during which one frame is displayed in the display device with the display device can structure the following display integrated image pickup device.

That is, there is provided an image display integrated image pickup device that combines an image pickup device with a display device comprising: a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; a control means that receives data representative of the moving image to be displayed on said display screen from said image pickup device, records the data in said frame memory, and displays the data on said display screen at a given timing to control an image displayed on said display screen; a polarizing plate that is disposed on a front surface of said display screen for polarizing the light from said display screen into a polarized light having a predetermined vibration plane, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed and a polarization plane rotating means that is disposed on a front surface of said polarizing plate for changing the vibration plane of the polarized light from said first region which has passed through said polarizing plate and the vibration plane of the polarized light from said second region which has passed through said polarizing plate in different directions, wherein said control means records the image corresponding to the first frame in said frame memory in an interlaced manner while the left-eye image is drawn on one region of said first region and said second region and the right-eye image is drawn on the other region.

In the display integrated image pickup device, since the image light of the left-eye image and the image light of the right-eye image can be polarized into linear polarized lights different in the vibration plane from each other, if there are prepared a left-eye polarizer that allows the image light of the left-eye image to pass and shields the image light of the right-eye image and a right-eye polarizer that allows the image light of the right-eye image to pass and shields the image light of the left-eye image, the viewer can easily conduct the stereoscopic vision. The left-eye polarizer and the right-eye polarizer can be structured as a normal stereoscopic polarized glasses, or can be integrated with the front surface of the display.

In the case that the display has one frame which is 1/30 seconds in time interval, and the image pickup device picks up the image while conducting the change-over between the shield state and the passing state in the left-eye shutter means and the right-eye shutter means at a time interval of 1/60 seconds, for example, the following display integrated image pickup device can be structured.

That is, there is provided an image display integrated image pickup device that combines an image pickup device with a display device comprising a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; a control means that receives data representative of the moving image to be displayed on said display screen from said image pickup device, records the data in said frame memory, and displays the data on said display screen at a given timing to control an image displayed on said display screen; a polarizing plate that is disposed on a front surface of said display screen for polarizing the light from said display screen into a polarized light having a predetermined vibration plane, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed; and a polarization plane rotating means that is disposed on a front surface of said polarizing plate for changing the vibration plane of the polarized light from said first region which has passed through said polarizing plate and the vibration plane of the polarized light from said second region which has passed through said polarizing plate in different directions, wherein said control means records the image corresponding to the first frame in said frame memory in an interlaced manner every 1/30 seconds while the left-eye image is drawn on one region of said first region and said second region and the right-eye image is drawn on the other region.

### BRIEF DESCRIPTION OF THE DRAWINGS

These and other objects, features and advantages of the present invention will become more apparent upon consideration of the following description of the preferred embodiments of the present invention taken in conjunction with the accompanying drawings.
Fig. 1 is a side view showing the outline of an inner structure of an image pickup device in accordance with a first embodiment of the present invention;
Fig. 2 is a perspective view for explaining the structure of a light shield plate shown in Fig. 1;
Fig. 3 is a side view showing the outline of an inner structure of an image pickup device in accordance with a second embodiment of the present invention;
Fig. 4 is a perspective view for explaining the structure of a light shield plate shown in Fig. 3;
Fig. 5 is a side view showing the outline of an inner structure of an image pickup device in accordance with a third embodiment of the present invention;
Fig. 6 is a perspective view for explaining the structure of a light shield plate shown in Fig. 5;
Fig. 7 is a side view showing the outline of an inner structure of an image pickup device in accordance with a fourth embodiment of the present invention;
Fig. 8 is a side view showing the outline of an inner structure of a display integrated image pickup device in' accordance with a fifth embodiment of the present invention;
Fig. 9 is a side view showing the outline of an inner structure of a display device shown in Fig. 8;
Fig. 10 is a diagram showing a display system when a stereoscopic image picked up by the image pickup device shown in

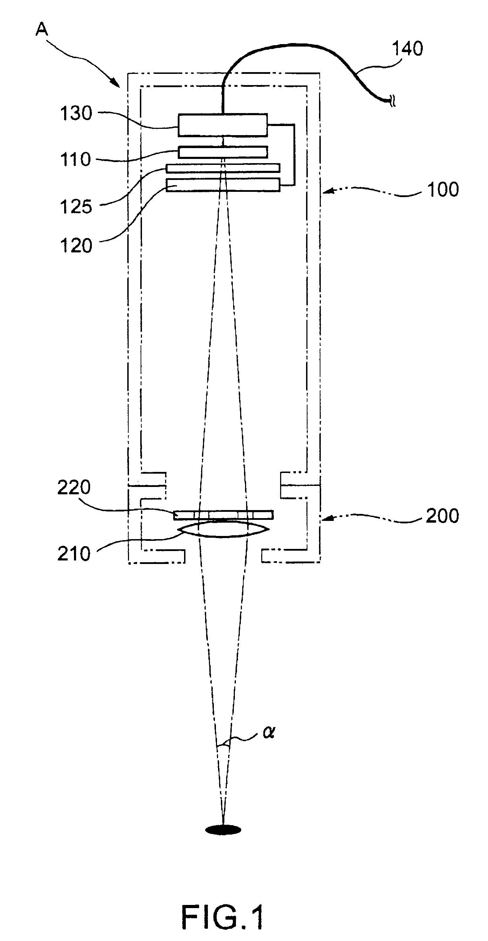

Fig. 1 is displayed on the display; and

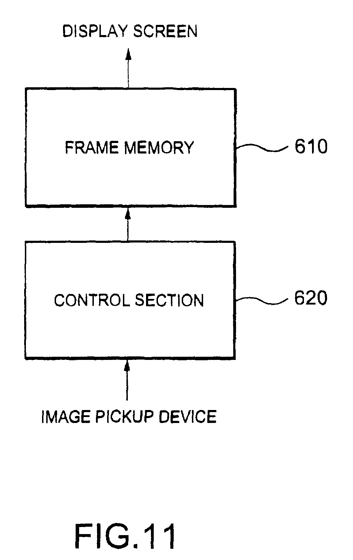

Fig. 11 is a diagram showing the electric structure of the image pickup device shown in Fig. 1.

### DETAILED DESCRIPTION OF THE PREFERRED EMBODIMENTS

Now, a description will be given in more detail of preferred embodiments of the present invention with reference to the accompanying drawings.

That is, a description will be given below of preferred structural examples of a stereoscopic image pickup device in accordance with first to fourth embodiments of the present invention, and a preferred structural example of a display integrated image pickup device in accordance with a fifth embodiment of the present invention. In the description of the respective embodiments, duplicate portions are denoted by duplicate marks, and redundant description will be omitted.

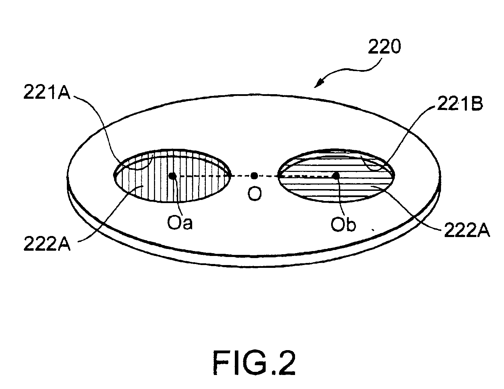

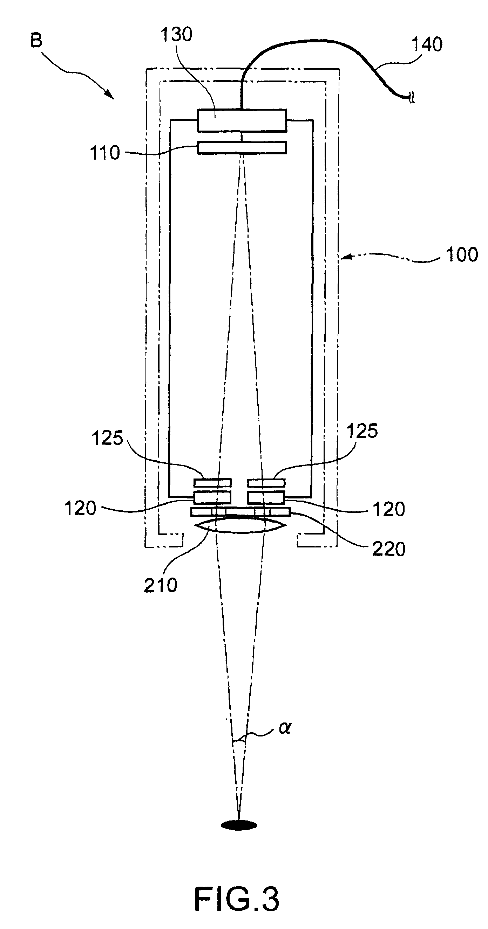

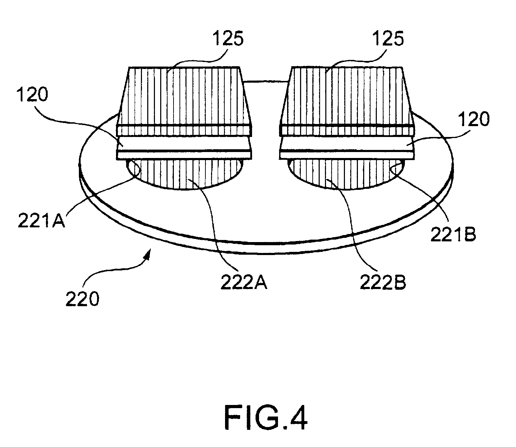

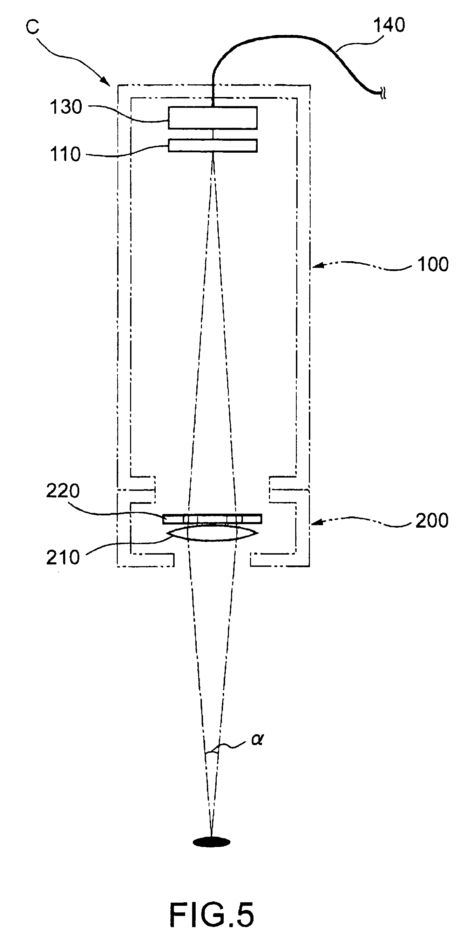

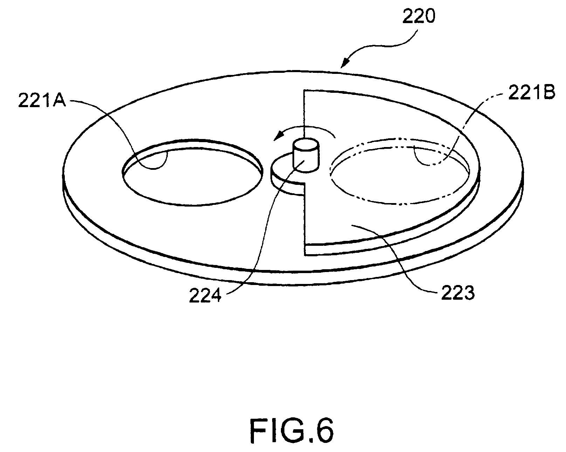

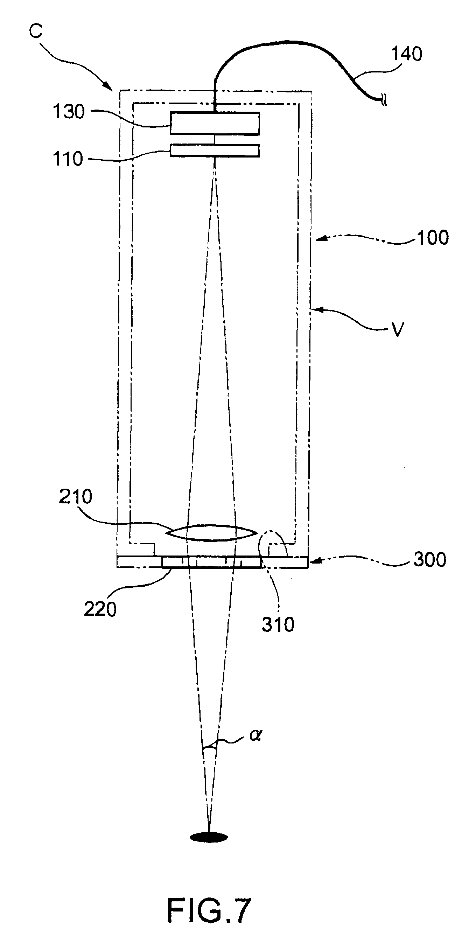

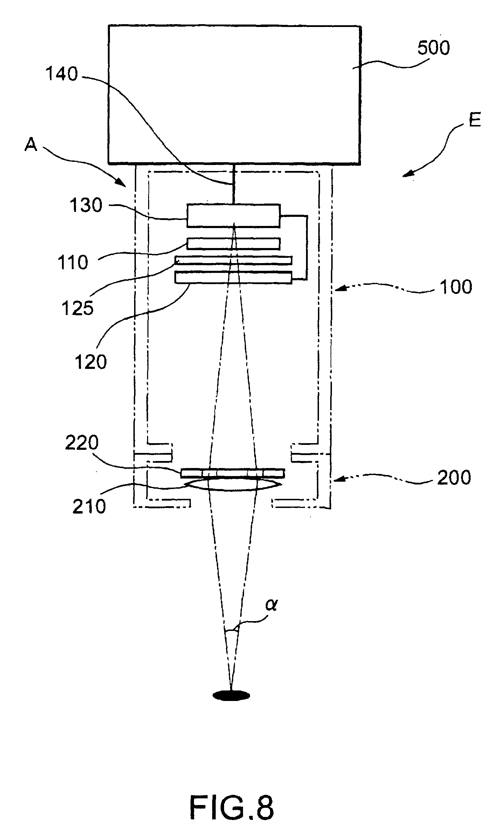

The stereoscopic image pickup device according to the first embodiment of the present invention will be described with reference to Figs. 1 and 2. The stereoscopic image pickup device according to the second embodiment of the present invention will be described with reference to Figs. 3 and 4. The stereoscopic image pickup device according to the third embodiment of the present invention will be described with reference to Figs. 5 and 6. The stereoscopic image pickup device according to the fourth embodiment of the present invention will be described with reference to Fig. 7. The stereoscopic image pickup device according to the fifth embodiment of the present invention will be described with reference to Fig. 8.

### (First Embodiment)

A stereoscopic image pickup device A according to a first embodiment includes a main body section 100 and an exchangeable lens section 200 as shown in Fig. 1.

In this embodiment, the main body section 100 and the exchangeable lens section 200 are formed in a hollow cylindrical shape so as to be detachably mountable on each other although the present invention is not limited to this structure.

The main body section 100 includes an image pickup element 110, a liquid crystal plate 120 and a selection polarizing plate 125 in its hollow portion. Also, in this embodiment, the image pickup device A includes a control section 130 in the hollow portion of the main body section 100. The image pickup element 110, the liquid crystal plate 120 and the control section 130 are fixedly attached into the hollow portion of the main body section 100, respectively. That is, the image pickup element 110, the liquid crystal plate 120 and the control section 130 are integrated together through the main body section 100.

The image pickup element 110 is so designed as to receive an image light to pick up the image and may be formed of, for example, a CCD element.

The control section 130 is connected to the image pickup element 110 and the liquid crystal plate 120 by connection wires. The control section 130 has a function of receiving stereoscopic image data produced by picking up an image through the image pickup element 110 and transmitting the stereoscopic image data to the external through a cable 140. The control section 130 has a function of conducting the control of the liquid crystal plate 120.

The liquid crystal plate 120 is disposed on a front surface of the image pickup element 110. The size and shape of the liquid crystal plate 120 are designed in such a manner that all of the image lights that reach the image pickup element 110 pass through the liquid crystal plate 120. The liquid crystal plate 120 is connected with an electrode not shown and takes two states in accordance with on/off changes of the voltage supply.

In this embodiment, the liquid crystal plate 120 allows the light to pass therethrough without changing the orientation of its vibration plane if the voltage is any one of on/off, and allows the light to pass therethrough after rotating the orientation of the vibration plane if the voltage is the other of on/off. In this embodiment, the liquid crystal plate 120 allows the light to pass therethrough without any change if the power supply is off, and allows the light to pass therethrough after rotating the vibration plane by 90° if the power supply is on, although the present invention is not limited to this structure.

The liquid crystal plate 120 continuously alternately takes those two states under control. The control of the liquid crystal plate 120 is conducted by the control section 130 as described above.

In this embodiment, the selection polarizing plate 125 is so designed as to polarize the light that has passed therethrough into a linear polarized light having a vibration plane directed rightward and leftward on a paper surface of Fig. 1, and the size and shape of the selection polarizing plate 125 are determined such that all of the image lights that reach the image pickup element 110 pass through the selection polarizing plate 125.

The exchangeable lens section 200 accommodates one objective lens 210 that constitutes one objective lens system of the present invention and a light shield plate 220 in its hollow portion. The objective lens 210 and the light shield plate 220 are fixedly fitted into the hollow portion of the exchangeable lens section 200, respectively. That is, the objective lens 210 and the light shield plate 220 are integrated with each other through the exchangeable lens portion 200, respectively.

As shown in Fig. 2, the light shield plate 220 is structured in such a manner that two openings 221A and 221B are defined in a circular plate member, and polarizing plates 222A and 222B are fitted into those openings 221A and 221B. The light shield plate 220 allows a predetermined portion of the light that has passed through the objective lens 210 serving as the objective lens system to pass through the openings 221A and 221B, and shields the remaining portion of the light. In other words, the light shield plate 220 has a function of focusing the lights from the objective lens 210 on two systems due to two diaphragms. Then, the light that has passed through one of the openings 221A and 221B becomes an image light for the left eye which will be described later whereas the light that has passed through the other of the openings 221A and 221B becomes an image light for the right eye which will be described later.

The image light for the left eye is picked up by the image pickup element 210 to produce an image for the left-eye whereas the image light for the right eye is picked up by the image pickup element 210 to produce an image for the right-eye. The left-eye image and the right-eye image make a viewer conduct a stereoscopic vision on the basis of a parallax thereof. The openings 221A and 221B are adjusted in the position and size in such a manner that the stereoscopic image produced by picking up the lights that have passed through the openings 221A and 221B by the image pickup element 210 results in an image with an appropriate visual angle α which makes a person who views the stereoscopic image conduct the proper stereoscopic vision.

The visual angle α is set in accordance with the degree of the roughness of an object to be subjected to stereoscopic vision and the circumstances that how the stereoscopic effect given to the viewer is going to be set. For example, if the stereoscopic effect is going to be large, the visual angle α may be set to be large. In general, the degree of the visual angle α is set to about 6 to 14°.

Although the present invention is not limited to this, the openings 221A and 221B in this embodiment are disposed eccentrically from the optical axis of the objective lens 210 that constitutes an objective lens system by regular distances, respectively. In Fig. 2, the center of the light shield plate 220 is denoted by O, the center of the opening 221A is denoted by Oa, and the center of the opening 221B is denoted by Ob. In this embodiment, the length between O and Oa becomes equal to the length between O and Ob. In the light shield plate 220 of this embodiment, the positional relationship of Oa and O is symmetrical with respect to the center of O.

The light shield plate 220 is also fitted in close contact with one surface of the objective lens 210, in more detail, an image pickup element 110 side surface of the objective lens 210. With this structure, the light shield plate 220 is disposed in proximity to the image side primary point of the objective lens 210.

The light polarizing plates 222A and 222B polarize the image lights that have passed therethrough into polarized lights different in the vibration plane from each other. Although the present invention is not limited to this structure, the polarizing plates 222A and 222B in this example are so designed as to polarize that image lights that have passed therethrough into polarized lights the vibration planes of which are orthogonal to each other. In more detail, the polarizing plate 222A in this embodiment polarizes the light that has passed therethrough into a polarized light having a vibration plane directed vertically in Fig. 2 (forward and backward with respect to the paper surface of Fig. 1), and the polarizing plate 222B polarizes the light that has passed therethrough into a polarized light having a vibration plane directed horizontally in Fig. 2 (rightward and leftward with respect to the paper surface of Fig. 1),

The image pickup device A operates as follows:

In picking up the stereoscopic image by the image pickup device A, a given exchangeable lens section 220 is fitted to the main body section 100. In this example, in the case where a plurality of exchangeable lens sections 200 each combining the objective lens 210 with the light shield plate 220 having the openings 221A and 221B defined therein which has a preferable relationship with the objective lens 210 are prepared in advance, the most preferable exchangeable lens section 200 for imaging is selected and then fitted onto the main body section 100.

Then, the image is picked up in this state. The image pickup may be conducted in the same manner as that in the case of using a normal video camera.

The image light from the object to be imaged passes through the objective lens 210 and then reaches the light shield plate 220. Then, only the predetermined portion of the image light passes through the two openings 221A and 221B of the light shield plate 220. The remaining portion of the image light is shielded by the light shield plate 220.

One of the lights that have passed through the openings 221A and 221B of the light shield plate 220 becomes the image light for the left eye, and the other light becomes the image light for the right eye. In this embodiment, for convenience, the image light that has passed through the opening 221A becomes the image light for the left eye, and the image light that has passed through the opening 221B becomes the image light for the right eye.

The image light for the left eye and the image light for the right eye are displaced in optical path from each other. Therefore, the left-eye image resulting from picking up the image light for the left eye by the image pickup element 110 and the right-eye image resulting from picking up the image light for the right eye by the image pickup element 110 become slightly different from each other although those images are picked up by one image pickup device. This displacement creates an appropriate visual angle a between the left-eye image and the right-eye image.

The image light for the left eye that has passed through the opening 221A passes through the polarizing plate 222A that is fitted into the opening 221A, resulting in a polarized light having the vibration plane directed forward and backward with respect to the paper surface of Fig. 1. The image light for the right eye that has passed through the opening 221B passes through the polarizing plate 222B that is fitted into the opening 221B, resulting in a polarized light having the vibration plane directed rightward and leftward with respect to the paper surface of Fig. 1.

After the image light from the object to be imaged passes through the objective lens 210 and then passes through the light shield plate 220, the image light reaches the liquid crystal plate 120.

In this example, the liquid crystal plate 120 alternately repeats a state in which the vibration plane of the light that has passed through the liquid crystal plate 120 is rotated by 90° and a state in which the light that has passed through the liquid crystal plate 120 passes as it is while repeating the on/off operation of the voltage supply under the control by the control section 130.

In the case where the liquid crystal plate 120 is in the state where the vibration plane of the light that has passed through the liquid crystal plate 120 is rotated by 90°, the image light for the left eye whose vibration is directed forward and backward with respect to the paper surface of Fig. 1 changes the direction of its vibration plane to the right and left direction with respect to the paper surface by passing through the opening 221A. On the other hand, the image light for the right eye whose vibration is directed rightward and leftward with respect to the paper surface of Fig. 1 changes the direction of its vibration plane to the forward and backward direction with respect to the paper surface by passing through the opening 221B.

In this example, the selection polarizing plate 125 shields a component directed forward and backward with respect to the paper surface out of the light components and allows a component directed rightward and leftward with respect to the paper surface to pass through the selection polarizing plate 125. Therefore, the image light for the right eye which is a linear polarized light having the vibration plane directed forward and backward with respect to the paper surface is shielded by the selection polarized plate 125, and the image light for the left eye which is a linear polarized light having the vibration plane directed rightward and leftward with respect to the paper surface passes through the selection polarized plate 125 as it is.

Therefore, in the case where the liquid crystal plate 120 is in the state where the vibration plane of the light that has passed through the liquid crystal plate 120 is rotated by 90°, only the image light for the left eye reaches the image pickup element 110 for imaging.

On the other hand, in the case where the liquid crystal plate 120 is in the state where it allows the light that has passed through the liquid crystal plate 120 to pass as it is without influencing the vibration plane thereof, the image light for the left eye whose vibration is directed forward and backward with respect to the paper surface of Fig. 1 is transmitted toward the selection polarizing plate 125 while keeping its vibration direction by passing through the opening 221A. On the other hand, the image light for the right eye whose vibration is directed rightward and leftward with respect to the paper surface of Fig. 1 is also transmitted toward the selection polarizing plate 125 while keeping its vibration direction by passing through the opening 221A.

In this example, the selection polarized plate 125 shields the component directed forward and backward with respect to the paper surface out of the light components, and allows the component directed rightward and leftward with respect to the paper sheet to pass. Therefore, the image light for the left eye which is a linear polarized light having the vibration plane directed forward and backward with respect to the paper surface is shielded by the selection polarized plate 125, and the image light for the right eye which is a linear polarized light having the vibration plane directed rightward and leftward with respect to the paper surface passes through the selection polarized plate 125 as it is.

Therefore, in the case where the liquid crystal plate 120 is in the state where the light is allowed to pass through the liquid crystal plate 120 as it is without changing the vibration plane of the light that has passed therethrough, only the image light for the right eye reaches the image pickup element 110 for imaging.

That is, the polarizing plates 222A and 222B, the liquid crystal plate 120 and the selection polarizing plate 125 function, in combination, as the left-eye shutter means of the present invention which takes any state of the shield state where the image light for the left eye is shielded and the passing state where the image light for the left eye is allowed to pass, and the right-eye shutter means of the present invention which takes any state of the shield state where the image light for the right eye is shielded and the passing state where the image light for the right eye is allowed to pass.

Then, the image light for the left eye and the image light for the right eye are alternately guided to the image pickup element 110, to thereby alternately pick up both of the image lights as described above. As a result, there is produced the stereoscopic image data representative of the stereoscopic image in which the left-eye image data representative of the left-eye image thus produced and the right-eye image data representative of the right-eye image thus produced are alternately arranged. The stereoscopic image data representative of the stereoscopic image is outputted to the external through the cable 140 by the control section 130. The stereoscopic image data is recorded in a given recording medium or used for directly displaying the stereoscopic image on a predetermined display device.

Incidentally, the contents of the stereoscopic image change depending on at how timing the image light for the left eye and the image light for the right eye are guided to the image pickup element. The timing at which the image light for the left eye and the image light for the right eye are guided to the image pickup element changes depending on a timing at which the two states of the liquid crystal plate 120 are changed over.

The control of the change-over timing can be appropriately conducted by the control section 130 as described above. In the case where the stereoscopic image is going to be a smooth moving image, the above-mentioned two states may be changed over at a regular time interval shorter than 1/40 seconds. According to the present invention, this corresponds to that the change-over of the shield state and the passing state in the left-eye shutter means and the right-eye shutter means is conducted at a regular time interval shorter than 1/40 seconds.

Also, the change-over of the above-described two states in the liquid crystal plate 120 can be conducted at a time interval which is the half of a period of time during which one frame of the display device that displays the stereoscopic image is displayed. In the case of conducing that image pickup, the timing at which the liquid crystal plate 120 changes over to any one of the above-mentioned two states may be made to coincide with the timing at which the operation for obtaining the image data representative of the image required to display the image for one frame in the image pickup element 110 starts, and also the timing at which the liquid crystal plate 120 changes over to the other of the above-mentioned two states may be made to coincide with the timing at which the operation for obtaining the remaining half of the image required to display the image for one frame in the image pickup element 110 starts. That is, the on/off operation of the change-over of the liquid crystal plate 120 can be made synchronous with a control signal of the image pickup element 110 so that a scanning period of time for one frame in the image pickup element is made to coincide with a period of time required to execute those two states in the liquid crystal plate 120 once by once, and also the timing at which the scanning for one frame is conducted is made to coincide with the timing at which the change-over of the states in the liquid crystal plate 120 occurs.

The period of time during which those two states should be changed over in the liquid crystal plate 120 becomes 1/60 seconds in the case where the stereoscopic image data is employed in the normal display device whose display period of time for one frame is set to 1/30 seconds.

The stereoscopic image data representative of the stereoscopic image thus produced is a string of data outputted ' from one circuit. Accordingly, the above stereoscopic image data can be used in the display device as it is, without requiring the synthesis or mixing of data unlike the case in which two video cameras are used. Therefore, the use of the stereoscopic image data thus produced permits the stereoscopic image to be displayed on the display without particularly requiring a device for synthesizing the data or not through a process of synthesizing or mixing the data.

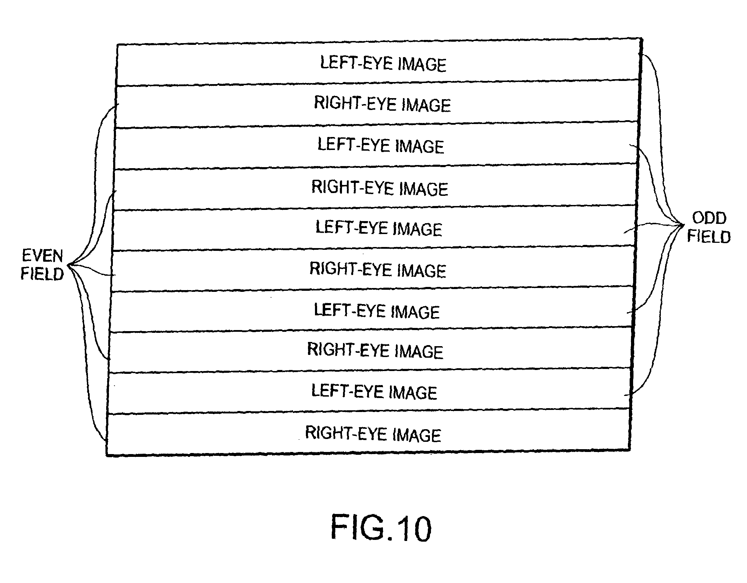

The image data representative of the stereoscopic image produced by changing over the states of the liquid crystal plate 120 at the time interval which is the half of the period of time during which one frame of the display device that displays the stereoscopic image is displayed can be displayed, for example, in the display device structured as shown in Fig. 11 by a system shown in Fig. 10.

Fig. 11 is a diagram showing the electric structure of a display device that displays a stereoscopic image.

That display device may be formed of, for example, a liquid crystal display device although the present invention is not limited to this.

The liquid crystal display device includes a display screen that is designed in such a manner that a large number of linear regions that display a part of an image are arranged in parallel into a plane, and a part of a given moving image is displayed on each of the linear regions to display the given moving image. That is, the liquid crystal display includes the display screen shown in Fig. 10. In this example, each of the linear portions elongated laterally, that is, each of linear regions can be formed of one scanning line. The number of scanning lines is large in fact, but the number of scanning lines is reduced and each of those regions is thickly indicated in Fig. 11 for the convenience of drawing.

As shown in Fig. 11, the liquid crystal display includes a frame memory 610 in which image data representative of an image for one frame of the moving image which is displayed on the display screen is recorded, and a control section 620 that receives the data (in this example, stereoscopic image data) representative of the moving image (in this example, stereoscopic image) to be displayed on the display screen from said image pickup device, records the data in the frame memory 610, and displays the data on the display screen at a given timing, to thereby control an image which is displayed on the display screen.

In this example, the above-mentioned linear regions are divided into two alternate groups. One of those groups forms a first region in the present invention, and the other group forms a second region in the present invention. When the interlaced system is applied to the display device, and even scanning lines and odd scanning lines are managed as an even field and an odd field, respectively, one of those fields may be set as the first region and the other field may be set as the second region.

The display device is so designed as to display the moving picture with 1/30 seconds as one frame although the present invention is not limited to this structure. Therefore, the control section 620 controls the image so as to write given data in the frame memory 610 at the above time interval and to conduct the given display on the display screen at the same interval on the basis of that data.

The display device displays the stereoscopic image in the following manner.

First, the control section 620 receives the stereoscopic image data produced in the above-mentioned image pickup device A.

Then, the control section 620 writes the data for displaying the left-eye image and the right-eye image in the frame memory 620 on the basis of that data. Thereafter, the control section 620 displays the stereoscopic image on the display screen on the basis of the data written in the frame memory 620.

The write of the data in the frame memory 620 and the display of the data on the display screen can be conducted in more detail as follows:

For example, in the case where the stereoscopic image data received by the control section 620 is obtained by picking up the image light for the left eye and the image light for the right eye at an interval of 1/30 seconds, the left-eye image data and the right-eye image data alternately contained in the stereoscopic image data are received by the control section 620 at the time interval of 1/30 seconds. Upon receiving those image data, the control section 620 alternately writes the left-eye image data and the right-eye image data in the frame memory 610 at the interval of 1/30 seconds. On the basis of this, the control section 620 alternately displays the left-eye image and the right-eye image on the display screen at the interval of 1/30 seconds as each of those images becomes one frame. In writing the left-eye image data and the right-eye image data in the frame memory 610, the control section 620 controls the data write timing so that each of the left-eye image and the right-eye image represented by the respective image data becomes one frame.

Also, in the case where the interlaced system is applied to the display device, and the stereoscopic image data received by the control section 620 is obtained by picking up the image light for the left eye and the image light for the right eye at an interval of 1/60 seconds, the write of the data in the frame memory 620 and the display of the data on the display screen can be conducted as follows.

In this case, the left-eye image data and the right-eye image data alternately contained in the stereoscopic image data are received by the control section 620 at the time interval of 1/60 seconds. Upon receiving those image data, the control section 620 alternately writes the left-eye image data and the right-eye image data in the frame memory 610 at the interval of 1/60 seconds. In the case where the interlaced system is applied to the display device, and even scanning lines and odd scanning lines are managed as an even field and an odd field, respectively, the record of the image data for one frame in the frame memory 61 is conducted in the order that after the image data for one of those fields is recorded, the image data for the other field is recorded.

Therefore, if one of the left-eye image and the right-eye image is displayed on one of those fields whereas the other of the left-eye image and the right-eye image is displayed on the other field, each of those drawings is conducted in 1/60 seconds so that the image for one frame can be displayed in 1/30 seconds. In order to enable such a display, the control section 610 writes the left-eye image data and the right-eye image data in the frame memory 610 so that the left-eye image is displayed in the first region and the right-eye image is displayed in the second region at the interval of 1/60 seconds. In writing the data, the control section 610 adjusts the write timing so that a timing at which the left-eye image and the right-eye image are displayed in the alternate regions in one frame is maintained. In this case, the stereoscopic image for one frame includes both of the left-eye image and the right-eye image.

In the example shown in Fig. 10, the left-eye image is displayed in the first region as the odd frame whereas the right-eye image is displayed in the second region as the even frame. The image lights from the stereoscopic image including the left-eye image and the right-eye image which are displayed on the display screen are divided into the image light for the left eye and the image light for the right eye by using some means, for example, a polarizing techniques, and the respective image lights are guided into the left eye and the right eye of the viewer, respectively, with the result that the viewer can conduct the stereoscopic vision.

Also, in the case where the display device takes 1/120 seconds in one frame display and applied with the interlaced system and the stereoscopic image data received by the control section 620 is obtained by picking up the image light for the left eye and the image light for the right eye at the interval of 1/60 seconds, the write of the data in the frame memory 610 and the display of the data on the display screen can be conducted in the following manners.

In this case, the left-eye image data and the right-eye image data alternately contained in the stereoscopic image data are received by the control section 620 at the time interval of 1/60 seconds. Upon receiving those image data, the control section 620 alternately writes the left-eye image data and the right-eye image data in the frame memory 610 at the interval of 1/120 seconds. Since the stereoscopic image data received by the control section 620 has only the time interval of 1/60 seconds, if data is going to be rewritten in 1/120 seconds, the amount of data is only the half of required amount. Therefore, in this case, if the left-eye image data and the right-eye image data are written in the frame memory once, and those data are then displayed on the display screen, those data may be displayed on the display screen again by using the same data. That is, a pair of left-eye image data and right-eye image data are used to display two frames. This makes display small in flicker possible.

Other structures are identical with those in the above-described example in which one frame is displayed in 1/30 seconds, and the interlaced system is applied.

### (Second Embodiment)

A stereoscopic image pickup device B according to a second embodiment is substantially identical in structure with the image pickup device A according to the first embodiment. What is different between the first and second embodiments resides in that the mechanism for alternately guiding the image light for the left eye and the image light for the right eye to the image pickup element is not separated from the main body section 100 and the exchangeable lens section 200.

The main body section 100 of the image pickup device B is made hollow. The main body section 100 is so structured as to include the image pickup element 110, the liquid crystal plates 120, the selection polarizing plates 125, the control section 130, the objective lens 210 and the light shield plate 220 in the hollow portion.

The liquid crystal plates 120 and the selection polarizing ' plates 125 are disposed in the image pickup device B two by two.

That is, two openings 221A and 221B are defined in the light shield plate 220 as in the first embodiment, and the liquid crystal plates 120 and the selection polarizing plates 125 are so disposed as to correspond to the respective openings 22A and 221B.

The polarizers 222A and 222B are fitted into the openings 221A and 221B of the light shield plate 220 in the image pickup device B, respectively. In this embodiment, the polarizers 222A and 222B polarize the lights that have passed therethrough into linear polarized lights, and are arranged so that the vibration planes of the lights which have been polarized into the linear polarized lights are directed to the common orientation unlike the first embodiment. In this embodiment, both of the lights that have passed through the polarizers 222A and 222B are polarized into the linear polarized lights having the vibration planes directed rightward and leftward with respect to the paper surface of Fig. 3.

Those two liquid crystal plates 120 are connected to the control section 130, respectively. Those liquid crystal plates 120 are connected with an electrode not shown, and take two states according to the on/off change-over of the voltage supply under the control by the control section 130.

In this embodiment, the liquid crystal plates 120 allow the lights to pass therethrough as they are if the power supply is off, and allow the lights to pass therethrough after rotating their vibration planes by 90° if the power supply is on although the present invention is not limited to this structure.

Those two selection polarizing plates 125 are disposed at the rear of those two liquid crystal plates 120. Each of those two selection polarizing plates 125 are arranged so that the lights that have passed therethrough are polarized into the linear polarized lights having the vibration planes directed rightward and leftward with respect to the paper surface of Fig. 3 although the present invention is not limited to this structure.

The image pickup device B operates as follows and picks up the images for the respective right and left eyes.

In the image pickup device B, the light that has passed through the objective lens 210 reaches the openings 221A and 221B of the light shield plate 220. Then, one of the lights that have passed through the openings 221A and 221B becomes the image light for the left eye image, and the other light becomes the image light for the right-eye image. The image light for the left-eye image and the image light for the right-eye image are allowed to pass through the polarizers 222A and 222B, respectively, and then polarized into the linear polarized lights having the vibration planes directed rightward and leftward with respect to the paper surface of Fig. 3.

Then, the image light for the left-eye image and the image light for the right-eye image which have been polarized into the linear polarized lights reach the liquid crystal plates 120, respectively. Each of the liquid crystal plates 120 continuously takes the state in which the light is allowed to pass through the liquid crystal plate 120 without changing the orientation of the vibration plane and the state in which the light is allowed to pass through the liquid crystal plate 120 after rotating the vibration plane by 90° as described above.

In the case where each of the liquid crystal plates 120 is in the state where the light is allowed to pass through the liquid crystal plate 120 without changing the orientation of the vibration plane, the image light for the left-eye image and the image light for the right-eye image are directed to the selection polarizing plates 125 disposed in the respective optical paths while maintaining the vibration planes directed rightward and leftward with respect to the paper surface, respectively. In this embodiment, as described above, the selection polarizing plates shield a component directed forward and backward with respect to the paper surface among the light components, and allow a component directed rightward and leftward with respect to the paper surface to pass through the selection polarizing plates. Accordingly, the image light for the left-eye and the image light for the right-eye which are the linear polarized lights having the vibration planes directed rightward and leftward with respect to the paper surface pass through the selection polarized plates 125.

Accordingly, in this embodiment, in the case where the liquid crystal plates 120 are in the state where the lights are allowed to pass through the liquid crystal plates 120 without changing the orientation of the vibration planes, both of the image light for the left-eye and the image light for the right-eye reach the image pickup element 110 and are then picked by the image pickup element 110.

In the case where each of the liquid crystal plates 120 is in the state where the light is allowed to pass through the liquid crystal plate 120 after rotating its vibration plane by 90°, the image light for the left-eye image and the image light for the right-eye image are directed to the selection polarizing plates 125 disposed in the respective optical paths after changing the orientations of the vibration planes to the forward and backward directions with respect to the paper surface. In this embodiment, as described above, the selection polarizing plates shield the component directed forward and backward with respect to the paper surface among the light components, and allow a component directed rightward and leftward with respect to the paper surface to pass through the selection polarizing plates. Accordingly, the image light for the left-eye and the image light for the right-eye which are the linear polarized lights having the vibration planes directed forward and backward with respect to the paper surface are shielded by the selection polarized plates 125.

Consequently, in this embodiment, in the case where the liquid crystal plates 120 are in the state where the lights are allowed to pass through the liquid crystal plates 120 after rotating their vibration planes by 90°, both of the image light for the left-eye image and the image light for the right-eye image are not picked up without reaching the image pickup device 110.

In this example, it is possible to alternately guide the image light for the left-eye image and the image light for the right-eye image to the image pickup element 110 by reversing the on/off control of the voltage supply to those two liquid crystal plates 120. In this embodiment, the left-eye image and the right-eye image are picked up in the above manner, to thereby produce the same stereoscopic image data as that in the image pickup device A of the first embodiment.

As described above, in this embodiment, the combination of the polarizers 222A and 222B disposed in the optical path of the image light for the left eye and the optical path of the image light for the right eye, the liquid crystal plates 120 and the selection polarized plates 125 constitutes the left-eye shutter means and the right-eye shutter means according to the present invention.

The left-eye shutter means and the right-eye shutter means are independent from each other. Therefore, in the above-described example, the left-eye shutter means and the right-eye shutter means are identical in structure with each other, but may be different in structure from each other if the image light for the left eye and the image light for the right eye are alternately guided to the image pickup element 110. For example, even if one of the polarizers 222A and 222B is disposed with being rotated by 90° and the on/off control of the voltage supply to both the liquid crystal plates 120 are conducted at the same timing, the same stereoscopic image data as that in the above case can be produced.

### (Third Embodiment)

A stereoscopic image pickup device C according to a third embodiment is substantially identical in structure with the image pickup device A according to the first embodiment. What is different between the third embodiment and the first embodiment resides in a mechanism for alternately guiding the image light for the left eye and the image light for the right eye to the image pickup element.

The image pickup device C includes the main body section 100 and the exchangeable lens section 200 as shown in Fig. 5. In this aspect, the image pickup device C is identical with the image pickup A.

The main body section 100 includes the image pickup element 110 and the control section 130 in the hollow portion. The control section 130 is connected to the image pickup element 110 by a connection line. The control section 130 has a function of receiving stereoscopic image data produced by picking up the image by the image pickup element 110 and transmitting the stereoscopic image data to the external through the cable 140.

No liquid crystal plate 120 is equipped within the main body section 100.

The exchangeable lens section 200 accommodates an objective lens system which is formed of, for example, one objective lens 210, and the light shield plate 220 therein.

The light shield plate 220 in the image pickup device C of the third embodiment is different from that of the first embodiment. That is, the light shield plate 220 is designed as shown in Fig. 4. The light shield plate 220 has two openings 221A and 221B defined in a circular plate member, and also has a substantially semi-circular shutter plate 223. The shutter plate 223 is made of an opaque material and also fixed to a rotary shaft 224 that penetrates the shutter plate 223. Since the rotary shaft 224 is rotated by a drive means not shown and formed of, for example, a spindle motor, the shutter plate 223 rotates on the light shield plate 220 with the rotation of the rotary shaft 224.

The shutter plate 223 closes one of the openings 221A and 221B and opens the other opening with its rotation. The image light that has passed through the objective lens 210 and reached the light shield plate 220 passes through the opened one of the openings 221A and 221B and is then transmitted toward the image pickup element 110. Because the openings 221A and 221B are opened one by one, the image light for the left eye and the image light for the right eye are alternately guided to the image pickup element 110 and then alternately picked up by the image pickup element 110. In this example, the light that has passed through the opening 221A becomes the image light for the left eye, and the light that has passed through the opening 221B becomes the image light for the right eye.

The timing at which the image light for the left eye and the image light for the right eye are guided to the image pickup element 110 is freely changed in accordance with the rotating speed of the shutter plate 223. The speed change can be conducted, for example, under the control by the control section 130 or can be conducted from the external through an input means disposed in advance or the like.

The shutter means including the shutter plate 223 may be structured by fitting a shutter used in a general camera to the openings 221A and 221B.

### (Fourth Embodiment)

A stereoscopic image pickup device D according to a fourth embodiment of the present invention is shown in fig. 7 and substantially identical in structure with that described in the third embodiment.

The image pickup device D is structured by attaching a part 300 including the same light shield plate 220 as that in the third embodiment to the general video camera V additionally. The part includes the light shield plate 220 and an attachment section 310 for detachably attaching the light shield plate 220 to the video, camera V.

The general video camera V accommodates the image pickup element 110 and the control section 130 in the main body section 100, and includes an objective lens system formed of, for example, one objective lens 210.

The above-mentioned part 300 is fitted onto, for example, a front surface of a lens-barrel of the video camera V through the attachment section 310. Then, the image light for the left eye and the image light for the right eye are alternately guided to the image pickup element 110 by the light shield plate 220 positioned on the front surface of the objective lens 210, to thereby alternately pick up the image light for the left eye and the image light for the right eye.

### (Fifth Embodiment)

A display integrated image pickup device E according to a fifth embodiment of the present invention is formed of the combination of the image pickup device A with a display device 500 as shown in Fig. 8. In the display integrated image pickup device, the image pickup device A can be replaced by, for example, the image pickup device B, the image pickup device C or the image pickup device D if the image light for the left-eye image and the image light for the right-eye image can be alternately picked up by one image pickup element.

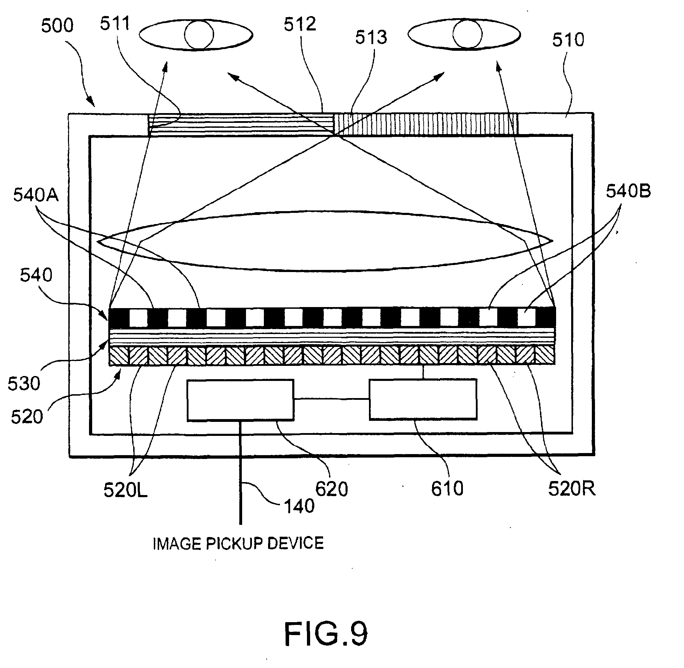

The display device 500 is shown in a cross-sectional view of Fig. 9. The display device 500 has a display screen 520, a polarizing plate 530, a polarization plane rotating plate 540, a visual field lens 550, a frame memory 610 and a control section 620 attached onto a case 510.

The case 510 is shaped into a box and accommodates the display screen 520, the polarizing plate 530, the polarization plane rotating plate 540, the visual field lens 550, the frame memory 610 and the control section 620 therein. A visual field hole 511 is defined in the case 510. The visual field hole 511 is so designed as to view the display screen 520 disposed in the interior of the case 510 from the visual field hole 511 to conduct the stereoscopic vision. Viewer side polarizers 512 and 513 are fitted into the visual field hole 511 so as to correspond to the positions of the left eye and the right eye of the viewer who conducts the stereoscopic vision, respectively. Each of the viewer side polarizers 512 and 513 polarizes the light that has passed through the polarizer into a polarized light having a given vibration plane. The viewer side polarizers 512 and 513 are so designed as to polarize the lights that have passed through the polarizers 512 and 513 into the polarized lights having the vibration planes different in orientation from each other. In this embodiment, the vibration planes of the lights that have passed through polarizers have the relationship of 90°. More specifically, the viewer side polarizer 512 is so designed as to polarize the light that has passed through the polarizer 512 into a polarized light having the vibration plane directed forward and' backward with respect to the paper surface of Fig. 9, and the viewer side polarizer 513 is so designed as to polarize the light that has passed through the polarizer 513 into a polarized light having the vibration plane directed rightward and leftward with respect to the paper surface of Fig. 9.

The display screen 510 is identical with that described in the first embodiment and shown in Fig. 10.

In this embodiment, the display screen 520 can be structured by, for example, a liquid crystal display. Also, the display screen 520 displays the image through the interlaced system under the control by the control section 620. The display screen is designed in such a manner that a large number of linear regions that display a part of an image are arranged in parallel into a plane, and a part of a given moving image is displayed on each of the linear regions to display the given moving image. The linear regions are arranged so that their longitudinal directions are oriented along a direction perpendicular to the paper surface of Fig. 9.

The display screen 520 is applied with the interlaced system as described above. Also, although the present invention is not limited to this structure, the stereoscopic image data from the image pickup device A is obtained by picking up the image light for the left eye and the image light for the right eye at an interval of 1/60 seconds. The write of the data in the frame memory 620 and the display of the data on the display screen can be conducted in the method described in the first embodiment. That is, in this example, the left-eye image is displayed in a first region 520L disposed in every two scanning lines, and the right-eye image is displayed in a second region 520R disposed in every different two scanning lines.

The functions of the frame memory 610 and the control section 620 are identical with those described in the first embodiment.

The polarizer 530 is disposed on the front surface of the display screen 520 so as to cover the entire display screen 520. The polarizer 530 polarizes the image light from the display screen 520 into a polarized light having the vibration plane directed in a given orientation. Therefore, in the case where the display screen 520 is structured by a liquid crystal display that naturally polarizes the image light into a polarized light, no polarizing plate 530 is required. In this embodiment, the light that has passed through the polarizing plate 530 is polarized into the polarized light having the vibration plane directed vertically with respect to the paper surface of Fig. 9 although the present invention is not limited to this structure.

The polarization plane rotating plate 540 has a function of making the image light emitted from the first region 520L for displaying the left-eye image and the image light emitted from the second region 520R for displaying the right-eye image have the different polarization planes with respect to the image light emitted from the display screen 520 and polarized through the polarization plate 530.

The polarization plane rotating plate 530 is structured by alternately disposing a rotating plate 520A that allows the light to pass through the rotating plate 520A after rotating the polarization plane and a non-rotating plate 520B that allows the light to pass through the non-rotating plate 520B without rotating the polarization plane, for example, at intervals equal to the intervals of the scanning lines on the display screen 520. The first region 520L corresponds to the rotating plate 540A and the second region 520R corresponds to the non-rotating plate 540B, respectively.

In the polarization plane rotating plate 540 of this embodiment, the rotating plate 520A is formed of a plate resulting from thinly molding a 1/4 wavelength plate which allows the light to pass through the plate after rotating the vibration plane of the polarized light by 90°, and the non-rotating plate 520B is formed of a plate resulting from thinly molding a resin which allows the light to pass through the plate without giving some influence on the vibration plane of the polarized light, and those rotating plates 520A and 520B are alternately disposed into a sheet.

The visual field lens 550 guides the image light that has been emitted from the display screen 520 and passed through the polarizing plate 530 and the polarization plane rotating plate 540 to the left eye and the right eye, respectively.

In the display integrated image pickup device E, the stereoscopic vision can be conducted in the follow design.

First, in the display screen 520, the left-eye image is displayed in the first region 520L arranged in every two scanning lines, and the right-eye image is displayed in the second region 520R arranged in every different two scanning lines, respectively, to thereby display the stereoscopic image.

Of the display screen 520, the light emitted from the first region 520L for displaying the left-eye image passes though the polarizing plate 530 and is then polarized into the polarized light having the vibration plane directed forward and backward with respect to the paper surface of Fig. 9. Since the image light passes through the rotating plate 520A and the vibration plane of the polarized light rotates by 90°, the vibration plane of the polarized light is directed rightward and leftward with respect to the paper surface of Fig. 9. That is, the image light from the left-eye image is polarized into the polarized light having the polarization plane directed rightward and leftward with respect to the paper surface of Fig. 9, and then transmitted toward the visual field hole 511 through the visual field lens 550.

On the other hand, the light emitted from the second region 520R for displaying the right-eye image passes through the polarizing plate 530 and is then polarized into the polarized light having the vibration plane directed forward and backward with respect to the paper surface of Fig. 9. The image light' passes through the rotating plate 520A without changing the vibration plane of the polarized light. That is, the image light from the right-eye image is polarized into the polarized light having the polarization plane directed forward and backward with respect to the paper surface of Fig. 9, and then transmitted toward the visual field hole 511 through the visual field lens 550.

The polarizing plate 530 and the polarizing plane rotating plate 540 need to be thinned to the degree that the image light from the first region 520L does not pass through the non-rotating plate 540B, and the image light from the second region 520R does not pass through the rotating plate 540A (substantially, such a case does not occur).

In the polarization plane rotating plate 540 of this embodiment, the rotating plate 520A is formed of a plate resulting from thinly molding a 1/4 wavelength plate which allows the light to pass through the plate after rotating the vibration plane of the polarized light by 90°, the non-rotating plate 520B is formed of a plate resulting from thinly molding a resin which allows the light to pass through the plate without giving some influence on the vibration plane of the polarized light, and those rotating plates 520A and 520B are alternately disposed into a sheet.

In this example, the viewer side polarizer 512 polarizes the light that has passed through the polarizer 512 into the polarized light having the vibration plane directed forward and backward with respect to the paper surface of Fig. 9. That is, the viewer side polarizer 512 allows the polarized light having the vibration plane directed forward and backward with respect to the paper surface to pass through the polarizer 512, but shields the polarized light having the vibration plane directed rightward and leftward with respect to the paper surface. On the other hand, the viewer side polarizer 513 polarizes the light that has passed through the polarizer 513 into the polarized light having the vibration plane directed rightward and backward with respect to the paper surface of Fig. 9. That is, the viewer side polarizer 513 allows the polarized light having the vibration plane directed rightward and leftward with respect to the paper surface to pass through the polarizer 513, but shields the polarized light having the vibration plane directed forward and backward with respect to the paper surface.

Accordingly, the viewer side polarizer 512 allows the image light from the right-eye image which is the polarized light having the vibration plane directed forward and backward with respect to the paper surface of Fig. 9 to pass through the polarizer 512, but shields the image light from the left-eye image. On the other hand, the viewer side polarizer 513 allows the image light from the left-eye image which is the polarized light having the vibration plane directed rightward and leftward with respect to the paper surface of Fig. 9 to pass through the polarizer 513, but shields the image light from the right-eye image.

Consequently, the viewer merely makes his right eye' approach the viewer side polarizer 512 and his left eye approach the viewer side polarizer 513, to thereby view only the right-eye image by the right eye and only the left-eye image by the left eye. As a result, the viewer can conduct the stereoscopic vision.

As was described above, according to the stereoscopic image pickup device of the present invention, the left-eye image and the right-eye image used as the stereoscopic image can be readily produced without any trouble such as the adjustment of an image quality.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A device for picking up a stereoscopic image, comprising:
one image pickup element to which an image light for a left eye and an image light for a right eye are guided for picking up an image for the left eye and an image for the right eye which are used as a stereoscopic image and given an appropriate visual angle;
a left-eye shutter means disposed in an optical path of the image light for the left eye for taking any one of a shield state where the image light for the left eye is shielded and a pass state where the image light for the left eye is allowed to pass; and
a right-eye shutter means for taking any one of a shield state where the image light for the right eye is shielded and a pass state where the image light for the left eye is allowed to pass;
wherein said left-eye shutter means and said right-eye shutter means are alternately put into the pass state to make said image pickup element alternately pick up the image light for the right eye and the image light for the left eye.

2. The device for picking up a stereoscopic image as claimed in claim 1, further comprising one objective lens system that allows the image light for the left eye and the image light for the right eye to pass.

3. The device for picking up a stereoscopic image as claimed in claim 1, further comprising one light shield plate having two openings defined therein so that one light that has passed through one of those two openings in said light shield plate becomes the image light for the left eye, and the other light that has passed through the other opening in said shield plate becomes the image light for the right eye.

4. The device for picking up a stereoscopic image as claimed in claim 3, further comprising one objective lens system that allows the image light for the left eye and the image light for the right eye to pass;
wherein said light shield plate is disposed in an optical path between said objective lens system and said image pickup element to shield the image light that has passed through said objective lens system so that a light that has passed through one of the openings in said light shield plate becomes the image light for the left eye, and another light that has passed through the other opening in said light shield plate becomes the image light for the right eye.

5. The device for picking up a stereoscopic image as claimed in claim 3, wherein the two openings are disposed eccentrically from the optical axis of said objective lens system by regular distances, respectively.

6. The device for picking up a stereoscopic image as claimed in claim 3, wherein said light shield plate is disposed in proximity to an image sided principle point of said objective lens system.

7. The device for picking up a stereoscopic image as claimed in claim 3, wherein said objective lens system comprises one objective lens, and said light shield plate is disposed close to any surface of said objective lens.

8. The device for picking up a stereoscopic image as claimed in claim 3, wherein each of said left-eye shutter means and said right-eye shutter means includes a shutter plate that is disposed to be movable forward and backward in an optical path of the image light for the left eye or the image light for the' right eye, through which the light does not pass; and
wherein said shutter plate is disposed in each of the openings of said light shield plate.

9. The device for picking up a stereoscopic image as claimed in claim 3, wherein said left-eye shutter means and said right-eye shutter means includes a polarizing plate, said polarizing plate comprises:
two polarizing plates each of which polarizes the image light that has passed through one polarizing plate into the polarized light different in an orientation of a vibrating face from the image light that has passed through another polarizing plate; and
a passing light selecting means for alternately taking a first state in which one image light which has been polarized into the polarized light is shielded and the other image light is allowed to pass, and a second state in which the other image light which has been polarized into the polarized light is shielded, and said one image light is allowed to pass.

10. The device for picking up a stereoscopic image as claimed in claim 9, wherein said passing light selecting means comprises one liquid crystal plate and one selection polarizing plate;
wherein said liquid crystal takes a non-rotation state in which the image light which has been polarized into the polarized light by the polarizing plate is allowed to pass without changing the orientation of its vibration plane, and a rotation state in which the image light which has been polarized into the polarized light by the polarizing plate is allowed to pass after its vibration plane has been rotated; and
wherein said selection polarizing plate allows one of the image lights that have passed through said polarizing plate to pass and the other image light to be shielded in one state of said non-rotation state and said rotation state, and allows the one of the image lights that have passed through said liquid crystal plate to be shielded and the other image light to be pass in the other state of said non-rotation state and said rotation state.

11. The device for picking up a stereoscopic image as claimed in claim 3, wherein each of said left-eye shutter means and said right-eye shutter means comprises:
a polarizing plate that is disposed on each of the openings of the light shield plate and polarizes the light that has passed through the light shield plate into a polarized light;
a liquid crystal plate that takes a non-rotation state where the image light that has been polarized into a polarized light by said polarizing plate is allowed to pass without changing the orientation of its vibration plane and a rotation state where the image light that has been polarized into a polarized light by said polarizing plate is allowed to pass after its vibration plane has been rotated; and
a selection polarizing plate that allows the image light that has passed through said liquid crystal plate to pass in one state of aid non-rotation state and said rotation state, and shields the image light that has passed through said liquid crystal plate in the other state of said non-rotation state and said rotation state.

12. The device for picking up a stereoscopic image as claimed in claim 9, wherein said objective lens and said light shield plate are integrated with each other, said image pickup element, said liquid crystal plate and said selection polarizing plate are integrated together, and said image pickup element, said liquid crystal plate and said selection polarizing plate are separatable from said objective lens and said light shield plate.

13. The device for picking up a stereoscopic image as claimed in claim 1, wherein both of said left-eye shutter means and said right-eye shutter means change over the shield state and the passing state at a time interval shorter than 1/40 seconds.

14. The device for picking up a stereoscopic image as claimed in claim 13, wherein each of said left-eye shutter means and said right-eye shutter means changes over the shield state and the passing state at a time interval which is the half of a period of time during which one frame is displayed on a predetermined display device on which the stereoscopic image is displayed.

15. The device for picking up a stereoscopic image as claimed in claim 13, wherein each of said left-eye shutter means and said right-eye shutter means changes over the shield state and the passing state at a time interval of 1/60 seconds.

16. A part which are fitted in an optical path of the image light of a video camera having one image pickup element and guides the image light for the left eye image and the image light for the right eye image to which an appropriate visual angle is given to said image pickup element, to thereby pick up a stereoscopic image by said video camera; wherein said part has two openings, one light that has passed through one of the openings in said light shield plate becomes the image light for the left eye, and another light that has passed through the other opening in said light shield plate becomes the image light for the right eye; and wherein a shutter plate through which a light does not pass and which is so disposed as to be movable forward and backward in an optical path of the left-eye image light or the right-eye image light is disposed in each of the openings.

17. An image display integrated image pickup device, comprising:
an image pickup device as claimed in claim 14; and
a display device comprising a display screen in which a large number of linear regions that display a part of an image are arranged in parallel into a plane, and a part of a given moving image is displayed on each of the linear regions to display the given moving image; a frame memory in which image data representative of an image for one frame of the moving image which' is displayed on said display screen is recorded; a control means that receives the data representative of the moving image to be displayed on said display screen from said image pickup device, records the data in said frame memory, and displays the data on said display screen at a given timing to control an image displayed on said display screen; a polarizing plate that is disposed on a front surface of said display screen for polarizing the light from said display screen into a polarized light having a predetermined vibration plane, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed; and a polarization plane rotating means that is disposed on a front surface of said polarizing plate for changing the vibration plane of the polarized light from said first region which has passed through said polarizing plate and the vibration plane of the polarized light from said second region which has passed through said polarizing plate in different directions;
wherein said control means records the image corresponding to the first frame in said frame memory in an interlaced manner while the left-eye image is drawn on one region of said first region and said second region, and the right-eye image is drawn on the other region.

18. An image display integrated image pickup device, comprising:
an image pickup device as claimed in claim 15; and
a display device comprising a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; a control means that receives data representative of the moving image to be displayed on said display screen from said image pickup device, records the data in said frame memory, and displays the data on said display screen at a given timing to control an image displayed on said display screen; a polarizing plate that is disposed on a front surface of said display screen for polarizing the light from said display screen into a polarized light having a predetermined vibration plane, in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed; and a polarization plane rotating means that is disposed on a front surface of said polarizing plate for changing the vibration plane of the polarized light from said first region which has passed through said polarizing plate and the vibration plane of the polarized light from said second region which has passed through said polarizing plate in different directions;
wherein said control means records the image corresponding to the first frame in said frame memory in an interlaced manner every 1/30 seconds while the left-eye image is drawn on one region of said first region and said second region, and the right-eye image is drawn on the other region.

19. A method of producing stereoscopic mage data which guides an image light for a left-eye image and an image light for a right-eye image to be used as a stereoscopic image to which an appropriate visual angle is given to an image pickup element of a video camera having said image pickup element to pick up the stereoscopic image to produce the stereoscopic image data representative of the stereoscopic image which is a moving picture, including the left-eye image data representative of the left-eye image and the right-eye image data representative of the right-eye image, said method comprising the step of:
alternately guiding the image light for the left eye and the image light for the right eye to said image pickup element to produce the stereoscopic image data in which the left-eye image data and the right-eye image data are alternately arranged.

20. The method of producing stereoscopic mage data as claimed in claim 19, wherein the image light for the left eye and the image light for the right eye are alternately guided to said image pickup element at regular time intervals shorter than 1/40 seconds to pick up the image.

21. The method of producing stereoscopic mage data as claimed in claim 20, wherein the image light for the left eye and the image light for the right eye are alternately guided to said image pickup element at a time interval which is the half of a period of time during which one frame is displayed on a predetermined display device on which the stereoscopic image is displayed to pick up the image.

22. The method of producing stereoscopic mage data as claimed in claim 20, wherein the image light for the left eye and the image light for the right eye are alternately guided to said image pickup element at a time interval of 1/60 seconds.

23. An image display method which is executed by a display device comprising: a display screen in which a large number of linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; and a control means that receives data representative of the moving image to be displayed on said display screen, records the data in said frame memory, and displays the data on said display screen at a given timing to control an image displayed on said display screen; in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed, said control means executing the steps of:
receiving the stereoscopic image data produced in the stereoscopic image data producing method as claimed in claim 21;
recording data representative of the stereoscopic image corresponding to one frame in said frame memory in an interlaced manner on the basis of a pair of the continuous left-eye image data and right-eye image data out of the received stereoscopic image data while the left-eye image is displayed in said first region and the right-eye image is displayed in said second region; and
displaying the stereoscopic image including the left-eye image and the right-eye image in one frame on said display screen on the basis of data representative of the stereoscopic image recorded in said frame memory.

24. An image display method which is executed by a display device comprising: a display screen in which a large number of' linear regions that display a part of an image are arranged in parallel into a plane, and a part of a given moving image is displayed on each of the linear regions to display the given moving image; a frame memory in which image data representative of an image for one frame of the moving image which is displayed on said display screen is recorded; and a control means that receives data representative of the moving image to be displayed on said display screen, records the data in said frame memory, and displays the data on said display screen at a given timing to control an image displayed on said display screen; in which the linear regions are divided into two alternate groups consisting of one group that forms a first region where a part of the left-eye image transmitted to the left eye of the viewer is displayed, and the other group that forms a second region where a part of the right-eye image transmitted to the right eye of the viewer and picked up with an appropriate visual angle with respect to the left-eye image is displayed, said control means executing the steps of:
receiving the stereoscopic image data produced in the stereoscopic image data producing method as claimed in claim 22;
recording data representative of the stereoscopic image corresponding to one frame in said frame memory in an interlaced manner on the basis of a pair of the continuous left-eye image data and right-eye image data out of the received stereoscopic image data every 1/30 seconds while the left-eye image is displayed in said first region and the right-eye image is displayed in said second region; and
displaying the stereoscopic image including the left-eye image and the right-eye image in one frame on said display screen on the basis of data representative of the stereoscopic image recorded in said frame memory every 1/30 seconds.

25. The image display method as claimed in claim 23, wherein said control means records the data representative of the stereoscopic image corresponding to one frame in said frame memory in such a manner that each of said first region and said second region corresponds to one scanning line that constitutes the display screen.

26. The image display method as claimed in claim 24, wherein said control means records the data representative of the stereoscopic image corresponding to one frame in said frame memory in such a manner that each of said first region and said second region corresponds to one scanning line that constitutes the display screen.
